# EUROPEAN PATENT APPLICATION

(11) **EP 2 955 775 A1**
(43) Date of publication of application: **16.12.2015**
(21) Application number: 14171825.4
(22) Date of filing: 10.06.2014
(51) Int. Cl.: H01M 4/58, C01G 49/12

(54) **Method of fabricating mesoporous carbon coated FeS2, mesoporous carbon coated FeS2, positive electrode material**

(71) Applicant: Max-Planck-Gesellschaft zur Förderung der Wissenschaften e.V. Berlin, 80539 München (DE)
(72) Inventor: The designation of the inventor has not yet been filed
(74) Representative: Manitz, Finsterwald & Partner GbR

(57) **Abstract**

The invention relates to a method of fabricating mesoporous carbon coated FeS₂, the method comprising the steps of:
- placing particulate FeS₂ into a solution comprising carbon;
- heating the solution to form carbon coated FeS₂ in a first heating step;
- heating the solution comprising carbon coated FeS₂ in a second heating step to bring about a carbonization of the carbon coated FeS₂ and a part decomposition of the carbon coated FeS₂ to FeS, wherein the temperature of the second heating step is higher than the temperature of the first heating step. The invention further relates to mesoporous carbon coated FeS₂ and to a positive electrode material.

## Description

The present invention relates to a method of fabricating mesoporous carbon coated FeS₂, to mesoporous carbon coated FeS₂, and to positive electrode material comprising such mesoporous carbon coated FeS₂.

The energy density of conventional Li-ion batteries with LiMO₂ (M = transition metal) cathodes and graphitic anodes is approaching a practical upper limit after two decades of research and development. As far as the search for new electrode materials for room-temperature rechargeable Li-ion batteries is concerned, they must combine a high energy density, a low cost, and a facile producibility in order to compete with current electrodes.

Fe-based conversion cathodes such as FeF₃ and FeS₂ are possible candidates to replace LiMO₂ intercalation cathodes. This is because they are relatively inexpensive and possess high theoretical energy densities. For example, FeF₃, as a typical iron-based fluoride, has a large theoretical capacity of 712 mA h g⁻¹ (3e- transfer), if one includes the conversion reaction associated with the formation of both LiF and metallic Fe which takes place at a voltage regime of 1.5 V.

In comparison to FeF₃, pyrite FeS₂ is more environmentally friendly, since it avoids the use of toxic HF in the production process. More importantly, the four electron reduction of cubic pyrite by lithium (FeS₂ + 4Li⁺ + 4e- → Fe + 2Li₂S) provides a theoretical specific capacity of 894 mA h g⁻¹ whereas the very best LiMO₂ intercalation cathodes can only provide approximately 200 mA h g⁻¹.

Pyrite FeS₂ is currently used in commercial primary batteries and shows remarkable power performance and significantly longer life than equivalent-sized alkaline batteries. However, when used as a secondary/rechargeable battery cathode at ambient temperature, only limited rechargeability has been achieved. Such a limited reversibility is mainly due to the intricacies of the conversion mechanism involved in the lithiation/delithiation of the pyrite cathode, which operates very differently from the commonly used LiMO₂ intercalation cathode materials.

To date pyrite FeS₂-based cathodes are prepared from micrometer-sized natural or synthetic pyrite particles showing a lithium storage performance that remains inadequate as far as a realization of rechargeable Li/FeS₂ batteries is concerned.

Recently, Son et al increased the performance stability of the FeS₂ cathode by embedding natural pyrite in a commercially available, stabilized polyacrylonitrile (PAN) matrix. Owing to the micrometer size of natural pyrite and the poorly conductive PAN matrix, the specific capacity and rate capability of pyrite cathode is, however, still unsatisfying.

For this reason it is an object of the invention to provide an Fe based electrode material which has improved properties with regard to the realization of rechargeable Li/FeS₂ batteries and also a favorable capacity. Moreover, it is an object of the present invention to provide an improved method of manufacture of such an electrode material which is also cost effective to realize.

This object is satisfied by a method according to claim 1.

The method of fabricating mesoporous carbon coated FeS₂ comprises the steps of:
- placing particulate FeS₂ into a solution comprising carbon;
- heating the solution to form carbon coated FeS₂ in a first heating step;
- heating the solution comprising carbon coated FeS₂ in a second heating step to bring about a carbonization of the carbon coated FeS₂ and a part decomposition of the carbon coated FeS₂ to FeS, wherein the temperature of the second heating step is higher than the temperature of the first heating step.

Such a fabrication method is cost effective to realize, since the materials used to form the FeS₂ are abundant and the individual steps can be carried out in common apparatus.

On use in a Li battery such a material exhibits a superior rate capability (a reversible capability of 439, 340 and 256 mA h g⁻¹ at 1 C, 2.5C and 5C, respectively) and comparatively stable cycling performance (approximate 10% capacity loss after 50 cycles at 0.5C with a capacity retention of 495 mA h g⁻¹). This results from a shortened Li⁺ diffusion distance, a high contact surface area, a sufficient conductivity, and an excellent structure stability of carbon-encapsulated pyrite, of the porous carbon coated FeS₂ nanooctahedra produced by this method.

Moreover, a FeS₂ battery material is obtained by such a method which has significantly improved charge/discharge capabilities compared to prior art pyrite material. This capacity is also higher than that obtained in common LiMO₂ intercalation cathodes.

In a preferred embodiment the particulate FeS₂ is provided with an average dimensional size, in particular an average crystal side length, in the range of from 100 nm to 2500 nm, preferably of 120 nm to 1000 nm and especially of 200 nm to 600 nm.

These particle sizes ensure that a battery with improved electrical properties is obtained. Moreover, such material can be handled well in industrial processes.

A particle size of less than 100 to 120 nm means that the industrial handling of the FeS₂ is no longer provided, whereas a particle size of larger than 2500nm results in a cathode material which still has a good electrical performance. This electrical performance does not significantly differ from that of current Li battery materials, but the material is significantly less expensive to produce.

In an advantageous embodiment the particulate FeS₂ is fabricated by dissolving FeCl₂•4H₂O and polyvinyl pyrrolidone in ethylene glycol by stirring to form a clear transparent solution, then sequentially adding NaOH and sulfur powder to the clear transparent solution and solvothermally treating the mixture to form FeS₂, preferably FeS₂ having a nanooctahedra structure.

This method of manufacture results in a very uniform size distribution of the particulate FeS₂. The more uniform the size distribution is the more reproducible the resultant battery material is and the better the corresponding classification thereof is.

Advantageously a duration of the step of solvothermally treating is selected to be in a range of from 5 hours to 45 hours, preferably of from 10 hours to 30 hours and especially of around 20 hours.

These growth periods advantageously allow the tailoring of the appropriate uniform size distribution desired for the corresponding battery material.

It is preferred if the solution comprising carbon is a solution containing polysaccharides, such as glucose. The chemical properties of aqueous solutions such as glucose are well known. Moreover, such solutions are cost effective, abundant and their behavior is well known, making these favorable for industrial processes.

In an advantageous embodiment the solution comprising carbon forms a carbon containing network on the FeS₂ and the carbon containing network stabilizes the FeS₂. The carbon containing network, on the one hand, confines the FeS₂ particles and, on the other hand, enhances the electrical properties of the resultant porous material. In particular, the properties with regard to recharging of such carbon coated porous material is significantly increased by such a carbon coating.

This carbon containing network, which stabilizes the FeS₂, is preferably created during the first heating step, wherein a temperature of the first heating step is in a range of from 150 to 220°C and preferably in arrange of from 170 to 200°C. Such temperature ranges are non problematic from an industrial aspect and beneficially influence the formation of a carbon structure or preferably a carbon network on the FeS₂ particles. This first heating step is advantageously carried out for a period in the range of from 10 to 40 hours, preferably of from 15 to 30 hours and especially of around 20 hours, this results in a good carbon coating of the FeS₂ particles.

Advantageously the temperature of the second heating step is in a range of from 600°C to 800°C, preferably of from 650°C to 750°C and especially of around 700°C.

These temperatures advantageously ensure that a conducting carbon structure is formed on the FeS₂ which stabilizes the FeS₂ and also permits a partial decomposition to FeS. This FeS can be removed at a later stage and the positions at which the FeS has been removed results in the desired pores present in the FeS₂. The carbon structure ensures that the size of the FeS₂ is not drastically reduced during the decomposition to FeS.

Advantageously the second heating step is carried out for a time sufficient to obtain a degree of conversion from FeS₂ to FeS in the range of from approximately 5 to 50%, preferably of from 20 to 30%, i.e. the ratio of FeS₂ to FeS is in the range of from approximately 19:1 to 1:1.

Advantageously the second heating step is carried out for a duration in the range of from 10 minutes to 30 minutes, preferably of about 20 min. This ensures a desired part decomposition of FeS₂ to FeS of approximately 20 to 30%.

It is further preferred if at least one of the first and the second heating steps takes place in an inert gas atmosphere, such as N₂, Ar, or He. Such an inert gas facilitates the formation of the carbon structure on the FeS₂ and ensures that a part conversion from FeS₂ to FeS takes place within the carbon coated structure. It should be noted that the second heating step can (but must not) directly follow the first heating step and can also be carried out in the same apparatus.

Such a range allows the desired porosity of the porous carbon coated FeS2 to be defined, since the degree of conversion is related to the porosity. Too small a porosity will not permit the diffusion of e.g. Li or Na ions through the material, whereas too large a porosity reduces the amount of material present and hence the electrical performance of such a material is also decreased.

In this connection it should be noted that a time sufficient to obtain a specific degree of conversion is generally regarded to be of the order of 10 to 30 minutes preferably of around 20 minutes, but generally depends on the precise chemistry, temperature and the degree of conversion desired.

In an advantageous embodiment the method comprises the further step of removing FeS from the solution once the second heating step has been carried out. The removal of the FeS results in the voids/pores not being filled with material and hence increases the electrical performance of this material.

It is preferred if the step of removing FeS is carried out using an acid, such as HCL or H₂SO₄. Such acids are comparatively environmentally friendly, cheap and are beneficial to remove FeS from FeS₂.

In a further aspect the present invention relates to mesoporous carbon coated FeS₂ wherein the mesoporous FeS₂ has a BET specific surface area in the range of 35 to 100 m²g⁻¹, preferably in the range of 40 to 50 m²g⁻¹ and wherein the mesoporous FeS₂ has an average dimensional size in the range of from 200 nm to 2500 nm, preferably in the range of from 250 nm to 700 nm. The mesoporous carbon coated FeS₂ is preferably fabricated in accordance with a method according to the invention.

Advantageously the mesoporous FeS₂ has pores having an average pore size in the range of 2 to 50 nm, preferably of 4 to 30 nm and the mesoporous FeS₂ generally has the shape of nanooctahedra. Such pore size allows the transport of Li, Na ions etc. through the electrode material and thus an improved electrical performance.

It is preferred when the mesoporous carbon coated FeS₂ has a discharge capacity of at least 300 mAhg⁻¹, preferably in the range of around 450 mAhg⁻¹ to 600 mAhg⁻¹, at a charge rate of 0.5C after 50 cycles. These discharge capacities at such charge rates make this material viable to possibly replace standard Li Battery materials.

In a further aspect of the present invention this relates to a positive electrode material which is obtainable using a method in accordance with the invention and which comprises mesoporous carbon coated FeS₂.

Such an electrode material can beneficially be used with Li, Na, Mg, Au and Ag batteries. The results presented in the following demonstrate that the current pyrite-based cathode can act as a promising cathode for high energy rechargeable batteries at a low cost of material.

The invention will be described in the following by way of embodiments in detail with reference to the Drawing, in which is shown:
- Figs. 1a - 1b: an evolution process of the porous carbon coated FeS₂ (Fig. 1a), and details of the discharge and charge processes of the porous carbon coated FeS₂ nanooctahedra cathode in a schematic illustration (Fig. 1b);
- Figs. 2a - 2d: scanning electron microscopy (SEM) images of pure FeS₂ precursor particles at different magnifications (Figs. 2a to 2c) as obtained from a simple low-temperature solvothermal treatment and Fig. 2s illustrates a typical X-ray diffractometry (XRD) pattern;
- Figs. 3a -3d: uniform FeS₂@C porous nanooctahedra having a carbon coating;
- Figs. 4a - 4d: Transmission electron microscopy (TEM) images of carbon coated FeS₂ and the presence of partly-graphited carbon thin layers;
- Figs. 5a - 5f: different electrochemical performance curves of FeS₂@C porous nanooctahedra cathode;
- Figs. 6a - 6d: further SEM images of FeS₂@C porous nanooctahedra showing the detailed microstructure information of these porous composite nanoparticles;
- Fig. 7: XRD pattern of the annealed and acid-etched FeS₂@C porous nanooctahedra, still showing phase-pure pyrite products;
- Fig. 8: further HRTEM images of the FeS₂@C porous nanoparticles at different selected areas, which clearly reveal the partly-graphited carbon shell;
- Fig. 9: further TEM and HRTEM images of the FeS₂@C porous nanoparticles at different selected areas, which clearly reveal the thickness of the partly-graphited carbon shell;
- Fig. 10: HRTEM images of the FeS₂@C porous nanoparticles at different selected areas, which reveal some voids/pores formed in carbon shells during the acid etching process;
- Fig. 11: a table showing specific capacities of lithium storage for FeS₂@C nanocomposites and for FeS₂;
- Fig. 12: SEM images of commercial bulk S powder at different magnifications showing that these commercial S powder particles have a wide size distribution (particle size varied from several micrometers to tens of micrometers);
- Fig. 13a - b: an SEM image (Fig. 13a) and the corresponding size (side length) distribution (Fig. 13b) of FeS₂ nanooctahedra precursors obtained via a one-pot solvothermal method;
- Fig. 14a - f: SEM images of FeS₂@C porous nanohybrids cathode obtained with solvothermally treated with 10 h (a,b); 30 h (c,d); and 40 h (e,f); and
- Fig. 15: electrochemical performances of carbon nanocages encapsulated porous pyrite FeS₂ nanooctahedra with different average sizes as disclosed in Fig. 14.

Features which have the same or a similar function will be described in the following using the same description and/or reference numeral. It is also understood that the description given with respect to one embodiment also applies to the same features of the other embodiments unless something is stated to the contrary.

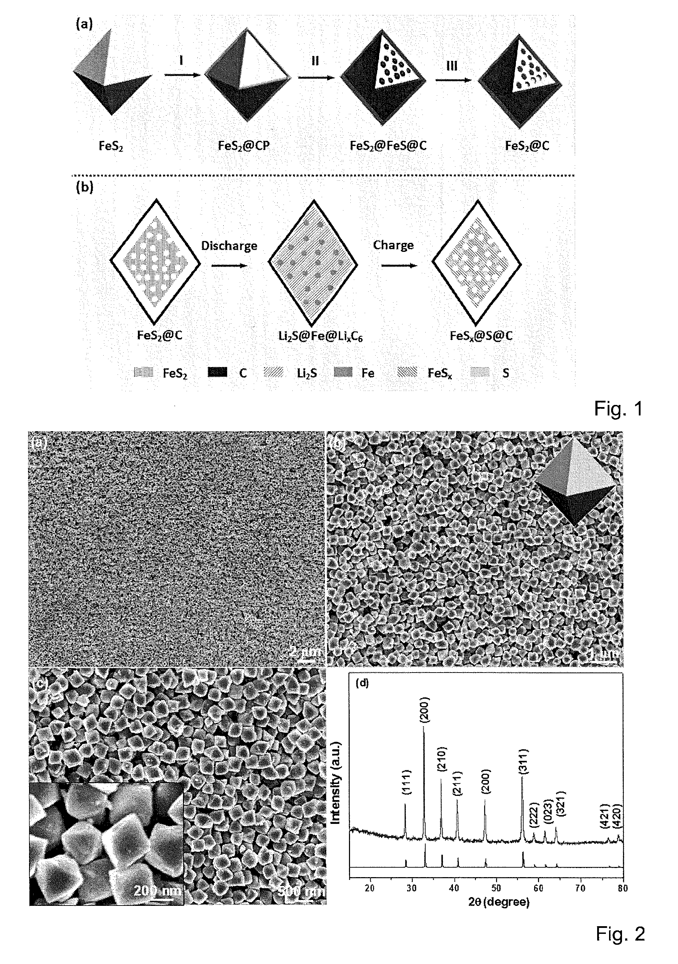

Fig. 1 a shows a schematic illustration of a method of fabricating mesoporous carbon coated FeS₂. The FeS₂ is preferably provided in the form of nanooctahedra, in order to form the particulate FeS₂, FeCl₂ and poly(vinyl pyrrolidone) (PVP) were dissolved in absolute ethylene glycol, in order to form a clear transparent solution. Subsequently NaOH solution and S powder were successively added to the solution, and the dispersion was solvothermally treated. As a result of the reaction of the sulfur powder with the initially formed FeS in the presence of the PVP surfactant, monodisperse FeS₂ nanooctahedra crystallized out under the synergetic effect of the crystallization habit of cubic FeS₂ and the selective adsorption of PVP molecules on the (111) face of FeS₂ nanooctahedra. These monodisperse FeS₂ nanooctahedra were subsequently used for the experiments explained in the following.

The particulate FeS₂ is then mixed into a solution of glucose at step I of Fig. 1 a. The surface of the hydrophilic FeS₂ nanooctahedra is then uniformly coated with carbon-rich polysaccharide (CP) layers (derived from glucose) by means of a low-temperature pyrolysis at a temperature in the range of 160°C to 200°C during a first heating step. This first heating step results in an intermediate product termed FeS₂@CP (FeS₂ coated with CP).

Following the first heating step the FeS₂@CP is heated in a second heating step (II) to bring about a carbonization of CP layers to carbon structures formed on the FeS₂ and to a partial decomposition of the encapsulated FeS₂. This results in an intermediate product of carbon coated FeS₂ with a component of FeS (denoted as FeS₂@FeS@C). The length of this heating step defines the degree of part decomposition of the carbon coated FeS₂ to FeS, in order to achieve a 20 to 30 % part decomposition the FeS2@CP is annealed for approximately 18 to 22 minutes at a temperature of 700°C in an N₂ atmosphere. The N2 atmosphere is at normal atmospheric pressure and the flow rate is 90 sccm (standard cubic centimeters per minute). Thus the temperature of the second heating step is higher than the temperature of the first heating step. Moreover, the carbon structure formed on the FeS₂ is converted into conductive carbon during step II.

Following this the FeS is removed from the FeS₂@FeS@C in step III. For this purpose hydrochloric acid (HCL) is provided as FeS is acid soluble, whereas the FeS₂ is not acid soluble with respect to HCL. The acid-etching leaches out the residual FeS and generates dense nanopores/voids in the surface of the FeS₂ nanooctahedra (converted from the incomplete reaction of FeS₂ to FeS). This finally results in a uniform carbon-encapsulation of the pyrite nanooctahedra (FeS₂@C).

Fig. 1b shows details of the discharge and charge processes of FeS₂@C porous nanooctahedra cathode material in a schematic illustration, in this case in a Li battery. As can be seen during discharge the FeS₂@C is converted to Li₂S@Fe@LiₓC₆, whereas during charging this is converted to FeSₓ@S@C. In this connection it should be noted that @ either means coated with and/or mixed with the respective particles. In this regard reference is also made to equations 1 to 6 in the following which indicate the chemical reactions taking place during charging and discharging.

Fig. 2a to 2c show scanning electron microscopy (SEM) images of pure FeS₂ precursor particles at different magnifications as they are obtained from a simple low-temperature solvothermal treatment as discussed herein. Figs. 2a and 2b show that these FeS₂ precursor particles have a regular octahedral morphology and high monodispersivity. The high-magnification SEM image (Fig. 2c) clearly displays that these monodisperse FeS₂ nanooctahedra have a uniform side length of approximately 300 nm. Local magnification SEM images (inset of Fig 2c) exhibit smooth crystallographic faces, indicating well-crystallized particles. A typical X-ray diffractometry (XRD) pattern (Figure 1d) shows that all reflection peaks can be indexed as the pure cubic phase of pyrite FeS₂ (JCPDS. No 42-1340). No other impurities such as marcasite, pyrrhotite, greigite or sulfur are detected.

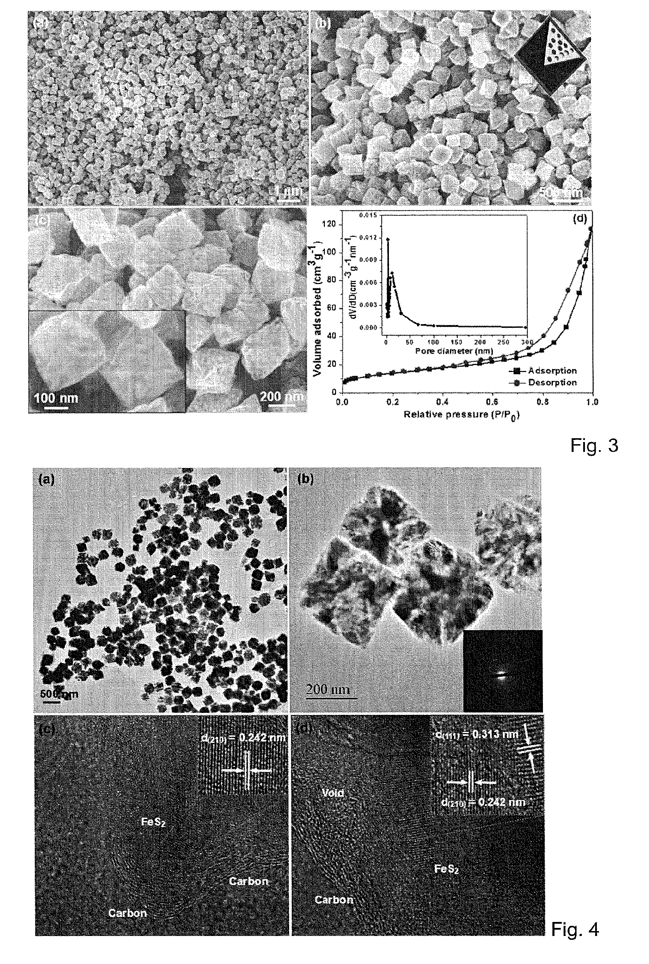

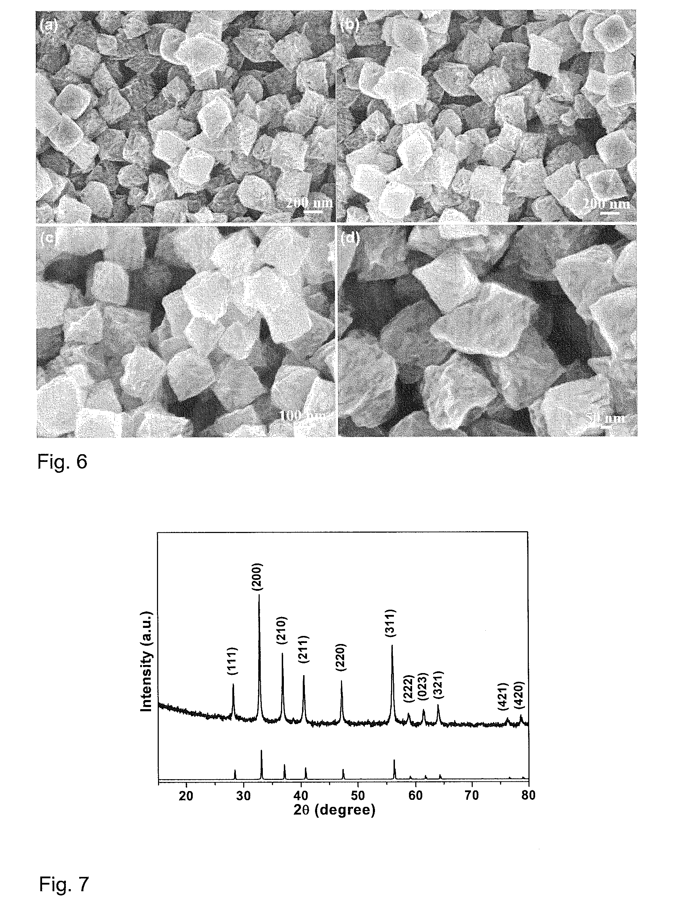

In contrast to Figs. 2a to 2c, Figs. 3a and 3b depict the uniform FeS₂@C porous nanooctahedra following their fabrication. The increased surface roughness of the these composite nanooctahedra compared to that of the original FeS₂ crystals (Figs. 2a-c) can be ascribed to the formation of carbon shells on the porous core particles (Figure 3c and Fig. 6). XRD patterns (see Fig. 7) of the products confirm the phase purity of the pyrite cathode, while the surface area of these carbon-encapsulated FeS₂ porous nanooctahedra was measured using the Brunauer-Emmett-Teller (BET) method.

As shown in Fig. 3d, the N₂ adsorption-desorption isotherm at 77 K can be classified as a type III isotherm with a distinct hysteresis loop, which is consistent with the presence of a distinct mesoporous microstructure having a BET specific surface area of approximately 47 m² g⁻¹. The pore size distribution (the inset of Figure 2d) according to the Barrett-Joyner-Halenda method, indicates that these FeS₂@C nanooctahedra are mesoporous composites connected with a broad pore size distribution in the range of 4-30 nm.

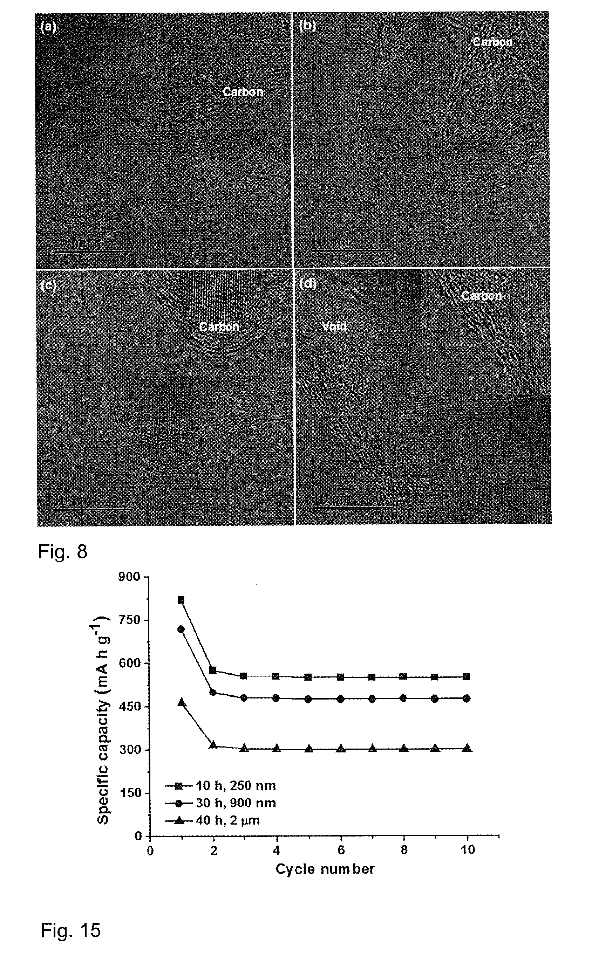

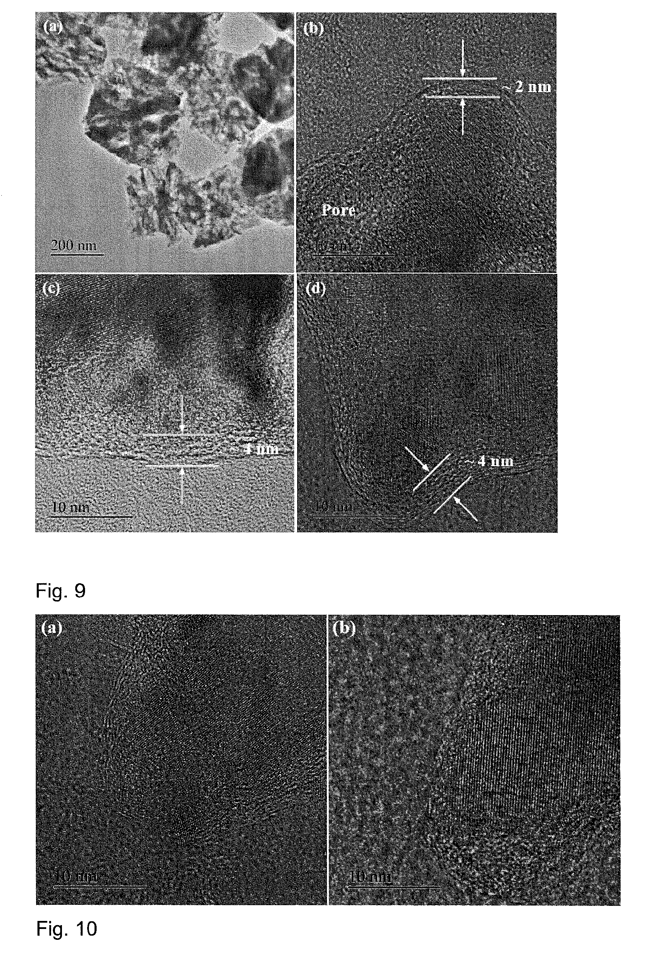

Figs. 4a to 4d show different transmission electron microscopy (TEM) images at different resolutions. These show a uniform coating of thin carbon layers around the whole surface of the porous FeS₂ crystals. The selected area electron diffraction (SAED) pattern in the inset of Figure 4b and the high resolution TEM images (HRTEM) shown in Figs. 4c and 4d further indicate the polycrystalline porous texture of FeS₂ and the presence of partly-graphited carbon thin layers (in this regard also see the further TEM and HRTEM images shown in Figs. 8 to 10). The carbon content of this composite is about 10 wt%, as measured by inductively coupled plasma atomic emission spectroscopy (ICP-AES).

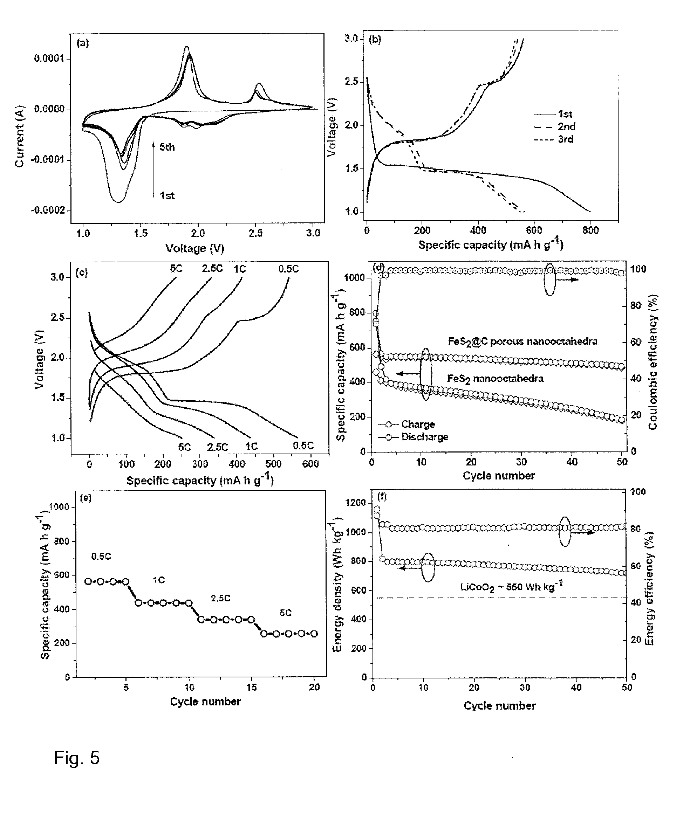

The Li storage performance of as-prepared FeS₂@C porous nanooctahedra was studied by cyclic voltammetry (CV) and galvanostatic charge/discharge cycling using two-electrode Swagelok-type cells. The results of these measurements are shown and discussed in relation to Figs. 5a to 5f.

For this purpose the electrochemical performances of the as-prepared products were measured by using two-electrode Swagelok-type cells. For the preparation of the working electrode, the mixture of FeS₂@C products, carbon black, and polyvinylidene fluoride (PVDF) in the weight ratio of 85:5:10 was ground in a mortar with *N*-methyl-2-pyrrolidone (NMP) as a solvent to make a slurry. The mass loading of the electrodes is about 1.3 mg/cm². In order to assemble Li-ion batteries, a Li foil was used as the counter electrode and a solution of 1 M LiPF₆ in ethylene carbonate (EC)/diethyl carbonate (DEC) (1:1 in volume) was used as an electrolyte. The charge/discharge curves and cycling capacity were evaluated by an Arbin MSTAT battery test system in the cut-off voltages of 1.0 and 3.0 V. Cyclic voltammetry (CV) was performed using a VoltaLab 80 electrochemical workstation.

Fig. 5a shows the first five CV curves of a FeS₂@C composite cathode at a scanning rate of 0.1 mV s⁻¹ for the Li/FeS₂@C cell with 1 M LiPF₆ in EC/DEC in the voltage range of 1.0-3.0 V. For the first cycle, a single reduction peak was seen at approximate 1.3 V and two oxidation peaks at 1.8 and 2.5 V. The first reduction peak at 1.3 V corresponds to the lithiation of pyrite involving the following reactions:

FeS₂ + 2Li⁺ + 2e⁻ → Li₂FeS₂ (1)

Li₂FeS₂ + 2Li⁺ + 2e- → 2Li₂S + Fe (2)

At ambient temperature (≤ 30 °C), these two reactions proceed simultaneously due to the relatively slow diffusion of Li⁺ into pyrite, which explains the single flat regime at about 1.5 V observed in Fig. 5b. Fig. 5b shows various voltage-capacity curves at a rate of 0.5C. There is a slight change in the position of the peaks from the second cycle onwards. Two additional small reduction peaks appear at 1.9 and 2.0 V. This indicates a change in Li⁺/FeS₂ reaction between the first and subsequent cycles, which was also observed in the discharge curves of Fig. 5b. According to previous research, the subsequent charge steps are proposed to proceed according to the following reactions:

Fe + 2Li₂S → Li₂FeS₂ + 2Li⁺ +2e⁻ (3)

Li₂FeS₂ → Li₂₋ₓFeS₂ + xLi⁺ + xe⁻ (0.5 < x < 0.8) (4)

Li₂₋ₓFeS₂ → FeS_{y} + (2 - y)S + (2 - x)Li⁺ + (2 - x)e⁻ (5)

Just recently, Son and Yersak et al. found that ortho-FeS₂ and sulfur were charge products at ambient temperature, and they proposed Equation (6) to describe the final oxidation step.

Li₂₋ₓFeS₂ → 0.8ortho-FeS₂ + 0.2FeS_{8/7} + 0.175S + (2 - x)Li⁺ + (2 - x)e⁻ (6)

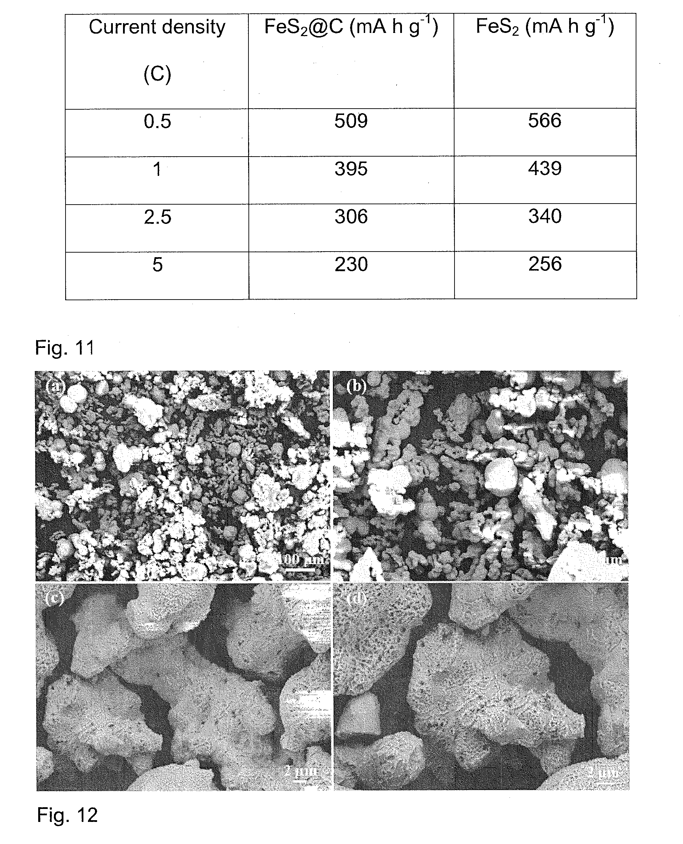

As the cycle number increased, the oxidation and reduction voltages remained unchanged, indicating good reversibility as shown in Fig. 5a. As is shown in Fig. 5b, the FeS₂@C-nanooctahedra exhibits a high discharge capacity of about 800 mA h g⁻¹ at a current density of 0.5C (447 mA g⁻¹), which is equivalent to -3.5 Li⁺ storage per FeS₂. Note that all the capacity values in the graph were calculated based on FeS₂ present in the composite particles. As the current nanocomposite cathode contains about 90% FeS₂, the capacity data for the whole composite mass are superior as well. (The values referring to FeS₂@C nanocomposites and FeS₂ at various current densities are listed in the table shown in Fig. 11).

Although the first charge capacity decayed to 566 mA h g⁻¹, the porous FeS₂@C cathode showed a very stable cycling performance after the first cycle (Fig. 5d). As can be seen from Fig. 5d, the discharge capacity remained at the very high value of 500 mA h g⁻¹ even after 50 cycles with a high average Coulombic efficiency. The Li-storage capacity of the FeS₂@C cathode is much higher than that of the current LiCoO₂ intercalation cathode materials (- 140 mA h g⁻¹). This enables the FeS₂@C cathode to exhibit a much higher discharge energy density even when compared with the theoretical energy density of LiCoO₂ cathode as shown in Fig. 5f in spite of its lower voltage. As shown in Fig. 5f these porous FeS₂@C nanooctahedra cathode materials have a stable energy density of 800 Wh kg⁻¹ during the whole 50 cycles, which is much higher than that of conventional LiCoO₂ (∼ 550 Wh kg⁻¹).

Furthermore, FeS₂@C porous nanooctahedra were subjected to a cycling at different charge/discharge rates to investigate their capacity-rate relationship. Fig. 5c shows, when cycled at different current rates from 0.5 to 5C in the voltage range of 1.0-3.0 V, that at 1C (1 C = 894 mA g⁻¹), the electrode exhibits a stable discharge capacity of 439 mA h g⁻¹. As the current rate is increased from 1C to 2.5C (2,235 mA g⁻¹) and 5C (4,470 mA g⁻¹), the discharge capacity slightly decreased from 439 to 340 and 256 mA h g⁻¹, respectively, indicating a superior rate capability of the current carbon-nanocage-encapsulated porous pyrite cathode.

The high reversible capacity of these hierarchically porous FeS₂@C nanooctahedra can probably be attributed to the distinct electrochemical activity of porous FeS₂ and to a synergetic effect of FeS₂ and the thin carbon layers.

Fig. 5f shows the discharge energy density and the energy efficiency of the FeS₂@C porous nanoctahedra *vs.* the cycle number shown along with the theoretical discharge energy density of an LiCoO₂ cathode (550 W h g⁻¹ based on the mass of LiCoO₂ only), which is calculated using an average voltage of 3.9 V and a capacity of 140 mA h g⁻¹.

Firstly, the uniform and continuous thin carbon layers not only remarkably enhance the effective electrical conductivity, but they also provide continuous conductive paths between FeS₂ porous nanoparticles and thus reduce the particle-to-particle interfacial resistance. By way of a comparison, Fig. 5d shows that the uniform bare FeS₂ nanooctahedra (as shown in Fig. 2) only retains 25% of its initial capacity (185 mA h g⁻¹) at the 50^{th} cycle at a current density of 0.5C, whereas the porous carbon coated FeS₂ almost has a three times as high charge capacity. As can been seen, the introduction of carbon coating results in an improved cyclability of FeS₂.

Secondly, the void space in porous FeS₂ nanooctahedra can easily be filled with the electrolyte, ensuring a large contact area, and hence a comparatively large exchange flux of Li ions across the interface.

Thirdly, both carbon layer and nanopores/voids provide elastic buffer spaces with respect to accommodating the volume changes upon Li ions insertion/extraction. Fourthly, the thin carbon coated layer reduces the dissolution of sulfur and lithium sulfide, which improves the cycling performance of the FeS₂ electrode. Lastly, the reduced particle dimension renders the solid state diffusion of Li ions favourable. The above synergetic effect thus favors the large capacity as well as superior cycle performance of the porous interconnected FeS₂-based cathode.

The synergetic advantage of combining carbon layers and the FeS₂ porous nanooctahedra, responsible for the excellent electrochemical performance of the overall electrode and the maximum utilization of electrochemically active FeS₂, can be ascribed to the following points:
1. In the current graphene-like carbon layer encapsulated FeS₂@C cathode, the graphene-like carbon layer acts as flexible carbon support for homogeneously encapsulating the FeS₂ nanoparticles. The thin carbon layers in the obtained composite not only provide an elastic buffer space to accommodate the volume expansion/contraction of FeS₂ during Li insertion/extraction process, but also efficiently prevent the aggregation of FeS₂ nanoparticles and the cracking or crumbling of electrode material upon continuous cycling, thus maintaining large capacity, high rate capability and cycling stability.
2. the thin carbon layer in the composite possesses a good electrical conductivity and serves the conductive channel between FeS₂ nanoparticles, decreasing the inner resistance of batteries and stabilizing the electronic and ionic conductivity, and therefore leads to a higher specific capacity.
3. the presence of FeS₂ between thin carbon layers effectively prevents the agglomeration of carbon sheets and consequently keeps a high active surface area.

Thus, in the language of the inventors, porous pyrite nanooctahedra encapsulated by uniform carbon nanocages were prepared via a facile self-sacrificing template route. Owing to the shortened Li⁺ diffusion distance, high contact surface area, good electronic conductivity, and superior structure stability of carbon-encapsulated pyrite, the as-obtained FeS₂@C porous nanooctahedra exhibit superior rate capability (a reversible capability of 439, 340 and 256 mA h g⁻¹ at 1C, 2.5C and 5C, respectively) and stable cycling performance (approximate 10% capacity loss after 50 cycles at 0.5C with a capacity retention of 495 mA h g⁻¹). The results shown herein show that the porous carbon coated FeS₂ may be utilizable as a conversion cathode based on earth abundant FeS₂ in order to increase the energy storage of lithium batteries.

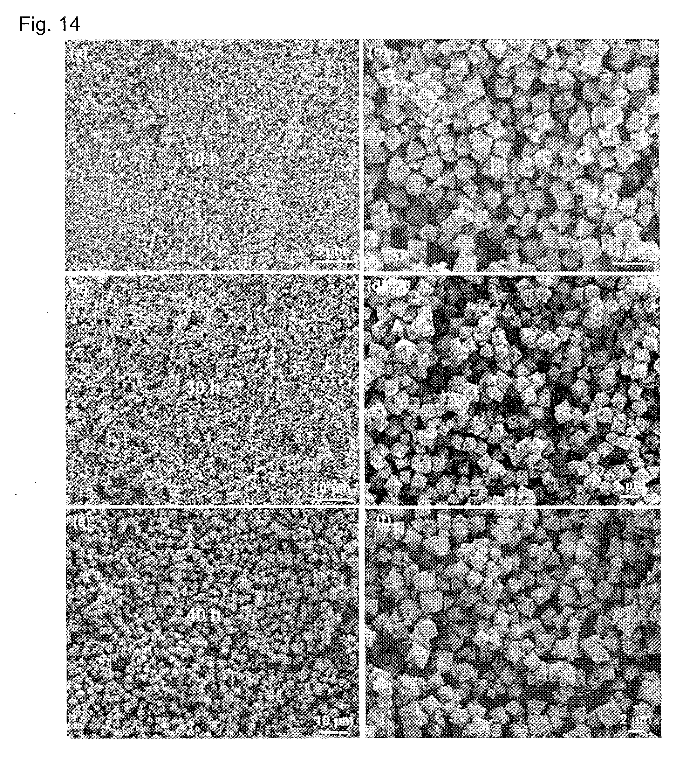

An example of the fabrication process of the porous carbon coated FeS₂ nanooctahedra will be discussed in the following using a facile self-sacrificing template route.
In a typical synthesis process, 0.76 FeCl₂·4H₂O and 2.1 g polyvinyl pyrrolidone (PVP) were dissolved in 120 mL absolute ethylene glycol, and stirred for about 1 h forming a clear transparent solution. Then 20 ml NaOH solution (1 M) and 0.8 g sulfur powder (the morphology and size of the commercial bulk S power are shown in Fig. 12) were sequentially added to the solution. The solution was then solvothermally treated at 180 ºC for a period of 20 hours. The resultant FeS2 is depicted in Fig 2. Figs. 14 and 15 respectively show the different resultant porous carbon coated FeS2 for various solvothermal treatment times.

During the solvothermal crystallization of FeS₂ nanooctahedra, the formation mechanism of the FeS₂ phase is based on the reaction among ferrous iron, glycol, OH⁻ and S powder, which can be described as below:

2HOCH₂CH₂OH → 2CH₃CHO + H2O (7)

2CH₃CHO + S + 20H⁻ → CH₃CO-COCH₃ + 2H₂O + S²⁻ (8)

Fe²⁺ + 2OH⁻ ↔ Fe(OH)₂ (9)

H₂S + 20H⁻ → S²⁻ + 2H₂O (10)

Fe²⁺ + S²⁻ → FeS (11)

FeS + S → FeS₂ (12)

FeS + H₂S → FeS₂ + H₂ (13)

Subsequently 0.3 g of the as-synthesized FeS₂ monodisperse nanooctahedra and 0.5 g glucose were hydrothermally treated at 190 ºC for 10 h. Subsequently these FeS₂@CP (carbon-rich polysaccharide) nanooctahedra were further annealed at 700 ºC in an N₂ flow for 20 min and etched by hydrochloric acid (1 M HCl) for 10 h in order to obtain the final product of FeS₂@C porous nanooctahedra.

The respective XRD patterns disclosed in Fig. 2d and Fig 7 were characterized by an X-ray diffractometry (XRD) on a Rigaku-DMax 2400 diffractometer equipped with the graphite monochromatized Cu K*α* radiation flux at a scanning rate of 0.02°s⁻¹. In this connection Fig. 7 shows an XRD pattern of the annealed and acid-etched FeS₂@C porous nanooctahedra, wherein the etched FeS₂@C porous nanooctahedra still comprise phase-pure pyrite products.

Scanning electron microscopy (SEM) analysis was carried using a Zeiss Gemini DSM 982 scanning electron microscope.

The structure of these FeS₂@C porous nanooctahedra was investigated by means of transmission electron microscopy (TEM, JEOL 4000FX). Nitrogen adsorption and desorption isotherms were measured at 77 K with a Quadrachrome Adsorption Instrument. The FeS₂ content of this composite is about 90 wt%, as measured by inductively coupled plasma atomic emission spectroscopy (ICP-AES).

Fig. 12 shows SEM images of commercial bulk S powder at different magnifications. As can be seen the commercial S powder particles have a wide size distribution (particle size varied from several micrometers to tens of micrometers).

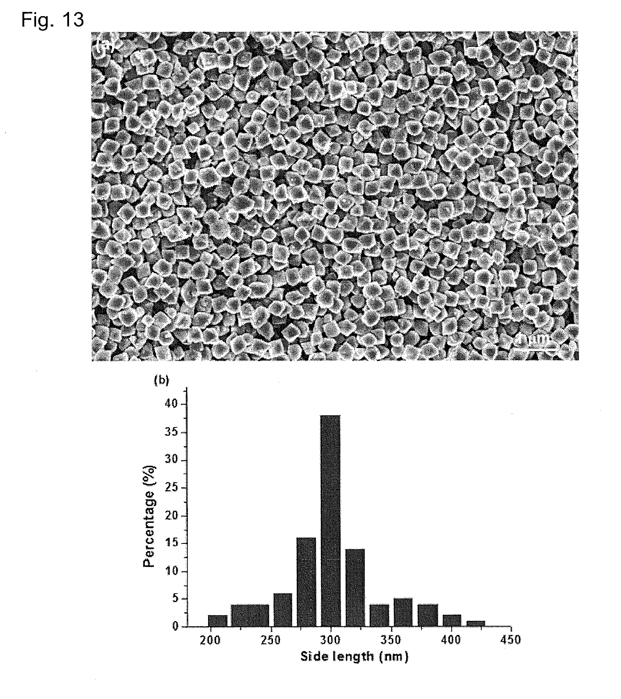

In contrast to this Fig. 13a shows an SEM image of the FeS₂ nanooctahedra precursors obtained via a one-pot solvothermal method as discussed herein. As can be seen far more uniform crystal like structures are grown in comparison to those commercially available. An investigation of the corresponding size (side length) distribution of these FeS₂ nanooctahedra precursors, see Fig. 13b, shows that 40% of the particles have a size which is centered around 300 nm. This indicates that the growth method employed in the present invention yields a very uniform size distribution of the resultant FeS₂ crystals.

Figs. 14a to 14f show various SEM images of FeS₂@C porous nanohybrids cathode material. The different material was obtained using different solvothermal treatment times, with Figs. 14 and 14b showing the resultant material following a solvothermal treatment time of 10 h; Figs 14c and 14d showing the resultant material following a solvothermal treatment time of 30 h; and Figs. 14e and 14f showing the resultant material following a solvothermal treatment time showing the resultant material following a solvothermal treatment time of 40h.

The longer the treatment time is the larger the resultant particles are. For a treatment time of 10 h the average particle size is approximately 250 nm (as shown e.g. in Fig. 14b). For a treatment time of 20 h the average particle size is approximately 300 nm (as shown e.g. in Figs. 13a and 13b). For a treatment time of 30 h the average particle size is approximately 900nm (as shown e.g. in Fig. 14b). For a treatment time of 40 h the average particle size is approximately 2000 nm (as shown e.g. in Fig. 14d).

Fig. 15 shows the respective discharge curves of the material obtained by means of this variation of the growth times shown in Figs. 14a to 14f. As can be seen the larger the particle size is the more reduced the electrical capabilities are, so that a particle size of more than 2500 nm, preferably of more than 2000 nm is not desirable. It appears as if there is a trade off between the particle size and the electrical performance the preferred particle size is thus in a range of 200 nm to 1000nm. Nevertheless improved results with respect to the prior art or even non-porous non-carbon coated FeS2 material, as is depicted by the "bare" curve shown in Fig. 5d, are still obtained even at an FeS2 particle size of 2000nm.

The following publications have been cited in the foregoing as background information:
J. M. Tarascon, M. Armand, Nature 2001, 414, 359.
K. T. Nam, D. W. Kim, P. J. Yoo, C. Y. Chiang, N. Meethong, P. T. Hammond, M. Chiang, A. M. Belcher, Science 2006, 312, 885.
J. Maier, Angew. Chem. Int. Ed. 2013, 52, 4998*.*
N. S. Choi, Z. Chen, S. A. Freunberger, X. Ji, Y. K. Sun, K. Amine, G. Yushin, L. F. Nazar, J. Cho, P. G. Bruce, Angew. Chem. Int. Ed. 2012, 51, 9994.
W. Liu, J. Liu, K. Chen, S. Ji, Y. Wan, Y. Zhou, D. Xue, P. Hodgson, Y. Li, Chem. Eur. J. 2014, 20, 824.
J. Liu, H. Xia, D. Xue, L. Lu, J. Am. Chem. Soc. 2009, 131,12086*.*
J. Liu, K. Tang, K. Song, P. A. van Aken, Y. Yu, J. Maier, Phys. Chem. Phys. Chem. 2013, 15, 20813.
J. Liu, K. Tang, K. Song, P. A. van Aken, Y. Yu, J. Maier, Nanoscale 2014, 6, 5081.
J. Cabana, L. Monconduit, D. Larcher, M. R. Palacin, Adv. Mater. 2010, 22, E170.
C. L. Li, C. Yin, L. Gu, R. E. Dinnebier, X. Mu, P. A. van Aken, J. Maier, J. Am. Chem. Soc. 2013, 135, 11425.
C. L. Li, X. K. Mu, P. A. van Aken, J. Maier, Adv. Energy Mater. 2013, 3, 113.
C. L. Li, L. Gu, J. W. Tong, J. Maier, ACS Nano 2011, 5, 2930.
C. L. Li, L. Gu, S. Tsukimoto, P. A. van Aken, J. Maier, Adv. Mater. 2010, 22, 3650.
J. Liu, W. Liu, Y. Wan, Z. Ma, S. Ji, J. Wang, Y. Zhou, P. Hodgson, Y. Li, J. Mater. Chem. A 2013, 1, 1969.
J. Liu, W. Liu. S. Ji, Y. Wan, M. Gu, H. Yin, Y. Zhou, Chem. Eur. J., 2014, 20,5815.
L. Li, M. C. Acevedo, S. N. Girard, S. Jin, Nanoscale 2014, 6, 2112.
Z. Tomczuk, B. Tani, N. C. Otto, M. F. Roche, D. R. Vissers, J. Electrochem. Soc. 1982, 129, 925.
S. K. Preto, Z. Tomczuk, S. V. Winbush, M. F. Roche, J. Electrochem. Soc. 1983, 130, 264.
T. D. Kaun, P. A. Nelson, L. Redey, D. R. Vissers, G. L. Heniksen, Electrochim. Acta 1993, 38, 1269.
Y. Shao-Horn, S. Osmialowski, Q. C. Horn, J. Electrochem. Soc. 2002, 149, A1547.
J. W. Cho, G. Cheruvally, H. J. Ahn, K. W. Kim, J. H. Ahn, J. Power Sources 2006, 163, 158.
L. A. Montoro, J. M. Rosolen, J. H. Shin, S. Passerini, Electrochim. Acta 2004, 49,3419.
S. B. Son, T. A. Yersak, D. M. Piper, S. C. Kim, C. S. Kang, J. S. Cho, S. S. Suh, Y. U. Kim, K. H. Oh, S. H. Lee, Adv. Energy Mater. 2014, 4, 1300961.
Y. Shao-Horn, S. Osmialowski, Q. C. Horn, J. Electrochem. Soc. 2002, 149, A1499.
D. Zhang, Y. J. Mai, J. Y. Xiang, X. H. Xia, Y. Q. Qiao, J. P. Tu, J. Power Sources. 2012, 217, 229.
T. A. Yersak, H. A. Macpherson, S. C. Kim, V. D. Le, C. S. Kang, S. B. Son, Y. H. Kim, J. E. Trevey, K. H. Oh, C. Stoldt, S. H. Lee, Adv. Energy Mater. 2013, 3, 120.
K. Tang, L. Fu, R. J. White, L. Yu, M. M. Titirici, M. Antonietti, J. Maier, Adv. Energy Mater. 2012, 2, 873.
J. Liu, Y. Wan, C. Liu, W. Liu, S. Ji, Y. Zhou, J. Wang, Euro. J. Inorg. Chem. 2012, 24, 3825.
Z. L. Schaefer, M. L. Gross, M. A. Hickner, R. E. Schaak, Angew. Chem. Int. Ed. 2010, 49, 7045.
K. Xie, X. Qin, X. Wang, Y. Wang, H. Tao, Q. Wu, L. Yang, Z. Hu, Adv. Mater. 2012,24,347.
S. Chen, j. Bi, Y. Zhao, L. Yang, C. Zhang, Y. Ma, Q. Wu, X. Wang, Z. Hu, Adv. Mater. 2012, 24, 5593.
R. Brec, A. Dugast, A. Le Mehaute, Mater. Res. Bull. 1980, 15, 619.
R. Fong, J. R. Dahn, C. H. W. Jones, J. Electrochem. Soc. 1989, 136, 3206.
C. H. W. Jones, P. E. Kovacs, R. D. Sharrma, R. S. McMillan, J. Phys. Chem. 1991,95,774.
D. Golodnitsky, E. Peled, Electrochim. Acta 1999, 45, 335.
L. Liu, Z. Yuan, C. Qiu, J. Liu, Solid State lonics 2013, 241, 25.
B. Wang, X. Li, X. Zhang, B. Luo, Y. Zhang, L. Zhi, Adv. Mater. 2013, 25, 3560.
S. J. Yang, S. Nam, T. Kim, J. H. Im H. Jung, J. H. Kang, S. Wi, B. Park, C. R. Park, J. Am. Chem. Soc. 2013, 135, 7394.
W. Wei, S. Yang, H. Zhou, I. Lieberwirth, X. Feng, K. Müllen, Adv. Mater. 2013, 25,2909.
Z. S. Wu, W. Ren, L. Wen, L. Gao, J. Zhao, Z. Chen, G. Zhou, F. Li, H. M. Cheng, ACS Nano 2010, 4, 3187.

## Claims

1. A method of fabricating mesoporous carbon coated FeS₂, the method comprising the steps of:
- placing particulate FeS₂ into a solution comprising carbon;
- heating the solution to form carbon coated FeS₂ in a first heating step;
- heating the solution comprising carbon coated FeS₂ in a second heating step to bring about a carbonization of the carbon coated FeS₂ and a part decomposition of the carbon coated FeS₂ to FeS, wherein the temperature of the second heating step is higher than the temperature of the first heating step.

2. A method in accordance with claim 1, wherein the particulate FeS₂ is provided with an average dimensional size, in particular an average crystal side length, in the range of from 100 nm to 2500 nm, preferably of 120 nm to 1000 nm and especially of 200 nm to 600 nm.

3. A method in accordance with claim 1 or claim 2, wherein the particulate FeS₂ is fabricated by dissolving FeCl₂•4H₂ and polyvinyl pyrrolidone in ethylene glycol by stirring to form a clear transparent solution, then sequentially adding NaOH and sulfur powder to the clear transparent solution and solvothermally treating the mixture to form FeS₂, preferably FeS₂ having a nanooctahedra structure.

4. A method in accordance with claim 3, wherein a duration of the step of solvothermally treating is selected to be in a range of from 5 hours to 45 hours, preferably of from 10 hours to 30 hours and especially of around 20 hours.

5. A method in accordance with any one of the preceding claims, wherein the solution comprising carbon is a solution containing polysaccharides, such as glucose.

6. A method in accordance with any one of the preceding claims, wherein the solution comprising carbon forms a carbon containing network on the FeS₂ and the carbon containing network stabilizes the FeS₂ and/or wherein the first heating step is carried out at a temperature of 150 to 220°C and preferably in a range of from170 to 200°C, and/or wherein the first heating step is carried out for a period in the range of from 10 to 40 hours, preferably of from 15 to 30 hours and especially of around 20 hours.

7. A method in accordance with any one of the preceding claims, wherein the temperature of the second heating step is in a range of from 600°C to 800°C, preferably of from 650°C to 750°C and especially of around 700°C, and/or wherein the second heating step is carried out for a duration in the range of from 10 minutes to 30 minutes, preferably of about 20 min.

8. A method in accordance with any one of the preceding claims, wherein at least one of the first and the second heating steps takes place in an inert gas atmosphere, such as N₂, Ar, or He.

9. A method in accordance with any one of the preceding claims, wherein the second heating step is carried out for a time sufficient to obtain a degree of conversion from FeS₂ to FeS in the range of from approximately 5 to 50%, preferably of from 20 to 30%, i.e. the ratio of FeS₂ to FeS is in the range of from approximately 19:1 to 1:1.

10. A method in accordance with any one of the preceding claims, wherein the method comprises the further step of removing FeS from the solution once the second heating step has been carried out.

11. A method in accordance with any one of the preceding claims, wherein the step of removing FeS is carried out using an acid, such as HCL or H₂SO₄.

12. Mesoporous carbon coated FeS₂, preferably fabricated in accordance with a method according to any one of the preceding claims, wherein the mesoporous FeS₂ has a BET specific surface area in the range of 35 to 100 m²g⁻¹, preferably in the range of 40 to 50 m²g⁻¹ and wherein the mesoporous FeS₂ has an average dimensional size in the range of from 200 nm to 2000 nm, preferably in the range of from 250 nm to 700 nm.

13. Mesoporous carbon coated FeS₂ in accordance with claim 12, wherein the mesoporous FeS₂ has pores having an average pore size in the range of 2 to 50 nm, preferably of 4 to 30 nm and the mesoporous FeS₂ generally has the shape of nanooctahedra.

14. Mesoporous carbon coated FeS₂ in accordance with claim 12 or claim 13, wherein the mesoporous carbon has a discharge capacity of at least 300 mAhg⁻¹, preferably in the range of around 450 mAhg⁻¹ to 600 mAhg⁻¹, at a charge rate of 0.5C after 50 cycles.

15. A positive electrode material obtainable using a method in accordance with one of claims 1 to 11, comprising mesoporous carbon in accordance with one of the claims 12 to 14.
